(19) **Europäisches Patentamt / European Patent Office / Office européen des brevets**

(11) **EP 3 458 819 B1**

(12) **FASCICULE DE BREVET EUROPEEN**

(45) Date de publication et mention de la délivrance du brevet:
**10.08.2022 Bulletin 2022/32**

(21) Numéro de dépôt: **17745415.4**

(22) Date de dépôt: **30.06.2017**

(51) Classification Internationale des Brevets (IPC):
**G01J 3/02** *(2006.01)* **G01J 3/28** *(2006.01)*
**G01J 3/453** *(2006.01)* **G01J 3/26** *(2006.01)*

(52) Classification Coopérative des Brevets (CPC):
**G01J 3/0205; G01J 3/0256; G01J 3/0297;**
**G01J 3/26; G01J 3/2803; G01J 3/4531**

(86) Numéro de dépôt international:
**PCT/FR2017/051777**

(87) Numéro de publication internationale:
**WO 2018/002558 (04.01.2018 Gazette 2018/01)**

(54) **SPECTRO-IMAGEUR MULTIVOIE A TRANSFORMEE DE FOURIER**

MEHRKANALIGER FOURIER-TRANSFORM SPEKTRALBILDDETEKTOR

FOURIER TRANSFORM MULTI-CHANNEL SPECTRAL IMAGER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2016 FR 1656162**

(43) Date de publication de la demande:
**27.03.2019 Bulletin 2019/13**

(73) Titulaires:
- **Office National d'Etudes et de Recherches Aérospatiales**
  **91120 Palaiseau (FR)**
- **Université Grenoble Alpes**
  **38400 Saint-Martin-d'Hères (FR)**

(72) Inventeurs:
- **GUERINEAU, Nicolas**
  **92160 Antony (FR)**
- **LE COARER, Etienne**
  **38100 Grenoble (FR)**
- **FERREC, Yann**
  **92340 Bourg La Reine (FR)**
- **DE LA BARRIERE, Florence**
  **93390 Clichy-Sous-Bois (FR)**

(74) Mandataire: **Brevalex**
**95, rue d'Amsterdam**
**75378 Paris Cedex 8 (FR)**

(56) Documents cités:
**WO-A2-2015/015493 US-A- 6 016 199**
**US-A1- 2012 268 745**

- **DIARD THOMAS ET AL: "Compact high-resolution micro-spectrometer on chip: spectral calibration and first spectrum", SPIE - INTERNATIONAL SOCIETY FOR OPTICAL ENGINEERING. PROCEEDINGS, S P I E - INTERNATIONAL SOCIETY FOR OPTICAL ENGINEERING, US, vol. 9836, 25 mai 2016 (2016-05-25), pages 98362W-98362W, XP060071328, ISSN: 0277-786X, DOI: 10.1117/12.2223692 ISBN: 978-1-5106-0753-8**
- **YANN FERREC ET AL: "Current status and perspectives for Microspoc, the miniature Fourier transform spectrometer", FOURIER TRANSFORM SPECTROSCOPY AND HYPERSPECTRAL IMAGING AND SOUNDING OF THE ENVIRONMENT, 1 janvier 2015 (2015-01-01), page FM4A.4, XP055366858, Washington, D.C. DOI: 10.1364/FTS.2015.FM4A.4 ISBN: 978-1-55752-814-8**

**Description**

**DOMAINE TECHNIQUE**

La présente invention concerne un spectro-imageur multivoie à transformée de Fourier destiné à imager, de manière simultanée, une pluralité d'états d'interférences donnée d'une scène. Plus particulièrement, l'invention concerne un dispositif compact destiné à produire des images d'une scène, de manière simultanée, et à différentes longueurs d'onde. Un tel dispositif est nommé spectro-imageur.

**DOMAINE TECHNIQUE ET ART ANTÉRIEUR**

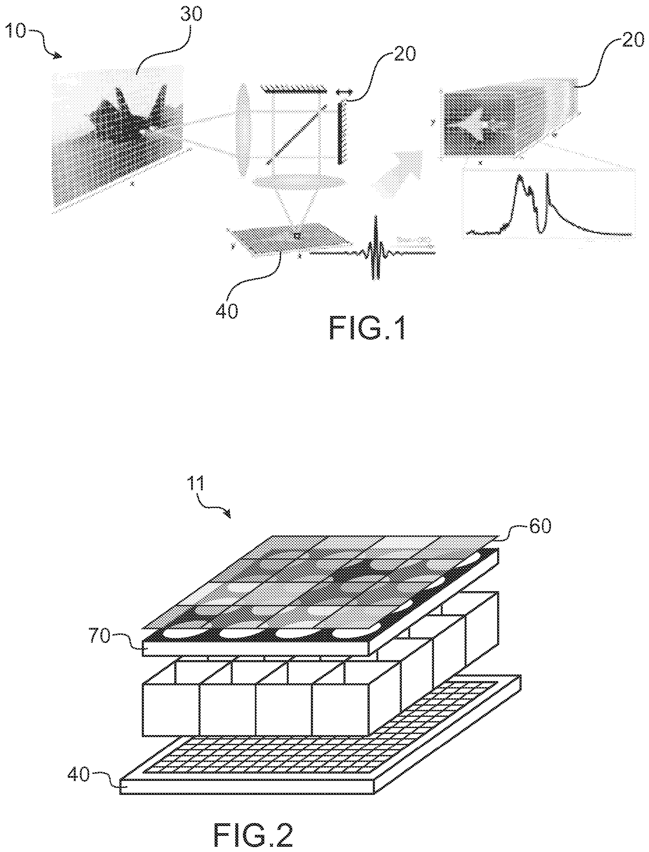

Un spectro-imageur 10 à transformée de Fourier, présenté à la figure 1, et connu de l'état de la technique comprend un interféromètre à deux ondes. Ce spectro-imageur, aujourd'hui commercialisé par la société TELOPS sous le nom « Hyper-Cam™ », comprend un interféromètre de Michelson et un photo détecteur 40.

Le photo détecteur 40 comprend une pluralité de sites photosensibles (« Pixel » selon la terminologie Anglo-Saxonne) destinés à imager une scène 30.

Pour différentes positions du miroir mobile 30 de l'interféromètre de Michelson, chaque site photosensible du photo détecteur 40, en correspondance avec un point donné de la scène 30, collecte donc une intensité lumineuse représentative d'un état d'interférence dudit point. L'ensemble des intensités lumineuses ainsi collectées par l'ensemble des sites photosensibles, pour une position du miroir mobile 30, correspond à un état d'interférence de la scène 30, que nous appelons « interféro-image ».

En fonctionnement, un tel dispositif collecte une pluralité d'interféro-images pour différentes positions du miroir mobile 30, de sorte que, pour chaque site photosensible, l'ensemble des états d'interférences collectés par ledit site corresponde à un interférogramme, codant la transformée de *Fourier* du spectre (ou intensité lumineuse spectrale) d'un point de la scène 30. Un traitement mathématique du type « transformée de Fourier » de l'ensemble des interféro-images peut alors être appliqué pour obtenir un ensemble d'images de la scène 30 à différentes longueurs d'ondes que nous appelons « spectro-images » (l'ensemble des spectro-images forme un « cube image »).

Cependant, ce dispositif n'est pas satisfaisant.

En effet, la formation d'une spectro-image d'une scène dans le plan du photo détecteur 40 nécessite d'acquérir une séquence d'interféro-images pour différentes positions du miroir mobile 20. Par conséquent, l'acquisition, avec une résolution suffisante, de scènes en mouvement est difficile, voire impossible.

Par ailleurs, de tels dispositifs nécessitent un alignement fin de leurs composants optiques, et sont ainsi d'utilisation complexe.

En outre, des réalignements fins peuvent être requis dès lors que des variations de température et de pression sont observées.

Enfin, du fait de sa masse et de son encombrement, seul le détecteur est refroidi, et requiert ainsi des réalignements réguliers. Des dispositifs selon l'art antérieur sont divulgués dans US2012268745 A1 et US6016199 A.

La figure 2 présente un autre spectro-imageur 11 connu de l'état de la technique divulgué dans la document [1] et cité à la fin de la description.

Dans le document [1], le spectro-imageur comprend un réseau de microlentilles 70 disposées en regard d'un détecteur photosensible (« Image Sensor » selon la terminologie Anglo-Saxonne). Le spectro-imageur comprend également un réseau de filtres colorés 60 disposés entre le réseau de microlentilles et le détecteur photosensible.

La disposition, la forme et la taille des microlentilles et des filtres colorés permet de constituer des images essentiellement monochromatiques d'une même scène sur différentes sections du détecteur photosensible (chaque filtre filtre l'image de la scène à une longueur d'onde spécifique avant de la transmettre au détecteur photosensible).

Contrairement au spectro-imageur présenté à la figure 1, il n'y a pas de partie mobile, et l'acquisition de la scène est simultanée pour toutes les longueurs d'ondes représentatives des filtres du réseau de filtres colorés. Nous qualifions ce dispositif de multivoie (Chaque filtre coloré correspondant à une voie). Ce dispositif forme directement les spectro-images sur le photo détecteur sans recours à un calcul de transformée de Fourier inverse (le cube image est obtenu directement sur la surface du photo détecteur).

Ce dispositif n'est, également, pas satisfaisant.

En effet, la résolution spectrale d'un tel dispositif est essentiellement dépendante du nombre de filtres 60 et de la largeur spectrale de chaque filtre. Ainsi, l'augmentation de la résolution spectrale impose d'augmenter le nombre de filtres et de réduire la largeur spectrale de chaque filtre, ce qui diminue d'autant la taille desdits filtres et par conséquent diminue également de manière importante le flux lumineux passant au travers de chaque filtre 60. Ainsi, dès lors que le nombre de filtres augmente, la sensibilité du dispositif se dégrade.

Par ailleurs, si le nombre de filtres colorés 60 augmente, l'image devient floue et peu contrastée.

En outre, le dispositif présenté à la figure 2 ne permet pas l'observation de scènes sombres.

Un but de l'invention est alors de proposer un spectro-imageur multivoie permettant l'acquisition simultanée de plusieurs images monochromatiques d'une même scène avec une résolution spectrale et une sensibilité améliorées par rapport à l'état de la technique.

Un autre but de l'invention est de proposer un spectro-imageur plus compact que ceux proposés dans l'état de la technique, de manière à pourvoir les refroidir à basse température dans leur entièreté.

## EXPOSÉ DE L'INVENTION

Les buts de l'invention sont au moins en partie atteints par un spectro-imageur multivoie à transformée de Fourier, le dispositif comprenant :

- un photo détecteur comprenant une pluralité de sites photosensibles affleurant une surface photosensible dudit photo détecteur,
- un réseau d'interféromètres à deux ondes majoritaires d'une finesse comprise entre 2 et 10, comprenant chacun une cavité délimitée par deux faces en regard l'une de l'autre et parallèles à la surface photosensible, les deux faces de chaque interféromètre étant espacées d'un espacement h différent d'un interféromètre à l'autre, et les interféromètres étant agencés selon un plan parallèle à la surface photosensible,
- un réseau de microlentilles agencées dans un plan parallèle à la surface photosensible.

Chaque microlentille du réseau de microlentilles étant appariée à un interféromètre du réseau d'interféromètres pour former une paire optique, ladite paire optique comprenant un plan focal image coïncidant avec la surface photosensible, ladite paire étant en regard d'une section de la surface photosensible.

Ainsi, chaque paire optique est agencée de manière à former une interféro-image (autrement dit imager un état d'interférence, pour une différence de marche donnée), sur la section de la surface photosensible avec laquelle elle est en regard.

Le spectro-imageur, selon l'invention, permet de collecter de manière simultanée une pluralité d'interféro-images.

Par ailleurs, le spectro-imageur selon l'invention est également adapté pour l'observation de scènes en mouvement.

En outre, le spectro-imageur selon l'invention présente une sensibilité améliorée par rapport au spectro-imageur de la présenté à la figure 2. En effet, les spectro-images sont construites à partir de l'ensemble des interféro-images, autrement dit, et contrairement au dispositif de l'art antérieur, l'intégralité du flux lumineux atteignant la surface photosensible est considéré pour la construction des spectro-images. Il est ainsi possible d'envisager de concevoir un spectro-imageur à haute résolution spectrale sans pour autant dégrader la sensibilité dudit spectro-imageur.

Enfin, contrairement au dispositif présenté à la figure 2, le spectro-imageur selon l'invention est plus flexible en terme de longueurs d'ondes couvertes. En effet, les longueurs d'ondes sondées par le dispositif de la figure 2 sont figées dès la conception dudit dispositif.

Le spectro-imageur peut en outre comprendre une lentille collimatrice comprenant un plan focal intermédiaire, et disposée parallèlement à la surface photosensible. La lentille collimatrice peut présenter une surface bombée. La surface bombée de la lentille collimatrice peut être traitée avec un dépôt antireflet, le traitement antireflet étant avantageusement une couche de matériau diélectrique, avantageusement du ZnS.

Selon un mode de mise en œuvre, le spectro-imageur comprend en outre un réseau de séparateurs de signaux, chaque séparateur de signal étant apparié à une paire optique et agencé de manière à ce qu'une image formée par chaque paire optique au niveau de la surface photosensible soit limitée à la section de la surface photosensible en regard de laquelle ladite paire optique est disposée.

Selon un mode de mise en œuvre, chaque séparateur de signal comprend des parois latérales perpendiculaires à la surface photosensible, et avantageusement en appui contre ladite surface photosensible.

Selon un mode de mise en œuvre, chaque séparateur de signal comprend des secondes parois latérales, chacune des secondes parois latérales isolant optiquement deux interféromètres à deux ondes majoritaires adjacents.

Selon un mode de mise en œuvre, le spectro-imageur comprend une première sous-lame, la première sous-lame comprend une première face et une seconde face parallèle à la première face, la seconde face étant parallèle et en regard d'une première face d'une seconde sous-lame, la seconde sous-lame comprenant également une seconde face sur laquelle est disposé le réseau de microlentilles, le dispositif comprenant également des marches formées sur l'une des deux faces choisie parmi la seconde face de la première sous-lame et la première face de la seconde sous-lame, l'autre des deux faces étant un dioptre plan, de sorte que les marches formées sur l'une des deux faces forment avec le dioptre plan le réseau d'interféromètres à deux ondes majoritaires, chaque marche étant formée à une profondeur différente de celle des autres marches, et étant à l'aplomb d'une microlentille selon une direction perpendiculaire de la surface photosensible.

Selon un mode de mise en œuvre, la deuxième face de la première sous-lame comprend un coefficient de réflexion compris entre 5% et 90 %.

Selon un mode de mise en œuvre, la première face de la seconde sous-lame comprend un coefficient de réflexion compris entre 5 % et 90 %.

Selon un mode de mise en œuvre, les marches ont une forme carrée, ou rectangulaire ou hexagonale.

Selon un mode de mise en œuvre, les interféromètres du réseau d'interféromètres à deux ondes majoritaires sont distribués selon une matrice bidimensionnelle, avantageusement une matrice bidimensionnelle carrée.

Selon un mode de mise en œuvre, le photo détecteur, le réseau d'interféromètres à deux ondes majoritaires, et le réseau de microlentilles sont tous disposés dans une enceinte cryostatique, avantageusement l'enceinte cryostatique comprend une ouverture.

Selon un mode de mise en œuvre, les microlentille présentent chacune une surface bombée, lesdites surfaces étant traitées avec un dépôt antireflet, le traitement antireflet étant avantageusement une couche de matériau diélectrique, avantageusement du ZnS.

Selon un mode de mise en œuvre, les interféromètres du réseau d'interféromètres à deux ondes majoritaires présentent un coefficient de réflexion moyen compris entre 12 % et 60 %, avantageusement compris entre 20 % et 50 %, préférentiellement égale à 42 %.

L'invention concerne également l'utilisation du spectro-imageur selon la présente invention pour la détection et/ou la quantification de gaz et/ou d'aérosols.

Selon un mode de mise en œuvre, les gaz sont des gaz à effet de serre, en particulier, du dioxyde de carbone, de eau, ou du méthane.

L'invention concerne également un dispositif électronique mobile comprenant un spectro-imageur selon la présente invention, le dispositif électronique mobile étant avantageusement un téléphone mobile ou une tablette ou un drone.

## BRÈVE DESCRIPTION DES DESSINS

D'autres caractéristiques et avantages apparaîtront dans la description qui va suivre des modes de mise en œuvre du spectro-imageur multivoie à transformée de Fourier selon l'invention, donnés à titre d'exemples non limitatifs, en référence aux dessins annexés dans lesquels :

- la figure 1 est une représentation schématique d'un spectro-imageur à transformée de Fourier comprenant un interféromètre de Michelson connu de l'art antérieur, le dispositif est adapté, pour chaque position du miroir, pour imager l'état d'interférence d'une scène,
- la figure 2 est une représentation schématique d'un spectro-imageur connu de l'art antérieur, le spectro-imageur comprend un réseau de microlentilles disposées en regard d'un détecteur photosensible, chaque microlentille présentant en amont du chemin optique un filtre de couleur, de sorte que l'image projetée par chaque lentille sur la section de détecteur photosensible qui lui est en regard est essentiellement monochromatique,
- les figures 3a à 3d sont des représentations schématiques d'un spectro-imageur selon une application particulière de l'invention ( la figure 3b étant identique à la figure 3a de manière à ne pas surcharger de références le schéma), la figure 3c représentant l'agencement de la première et de la seconde sous-lame, et la figure 3d représentant le détail d'un interféromètre à deux ondes majoritaires,
- la figure 3e est une représentation schématique d'un séparateur de signal,
- la figure 4 est une représentation schématique d'un photo détecteur représenté par une matrice de sites photo sensibles disposés selon M colonnes et N lignes,
- la figure 5 est une représentation schématique de la transmission d'un rayonnement lumineux par un interféromètre à deux ondes majoritaires.

## EXPOSÉ DÉTAILLÉ DE MODES DE RÉALISATION PARTICULIERS

L'invention décrite de manière détaillée ci-dessous met en œuvre un réseau d'interféromètres à deux ondes majoritaires 140 disposé dans un dispositif optique comprenant un réseau de microlentilles. Chaque microlentille est appariée à un interféromètre pour former une paire optique 160. La paire optique 160 est agencée pour projeter, pour une différence de marche donnée, l'état d'interférence de la scène sur une section d'un détecteur photosensible. Un tel dispositif permet de faire l'acquisition d'une pluralité d'interféro-images de manière simultanée, et sans recours à des pièces mobiles.

Le dispositif optique peut également comprendre une lentille collimatrice 110, destinée à envoyer à l'infini l'image d'un objet se trouvant dans son plan focal objet (ci-après désigné plan focal intermédiaire).

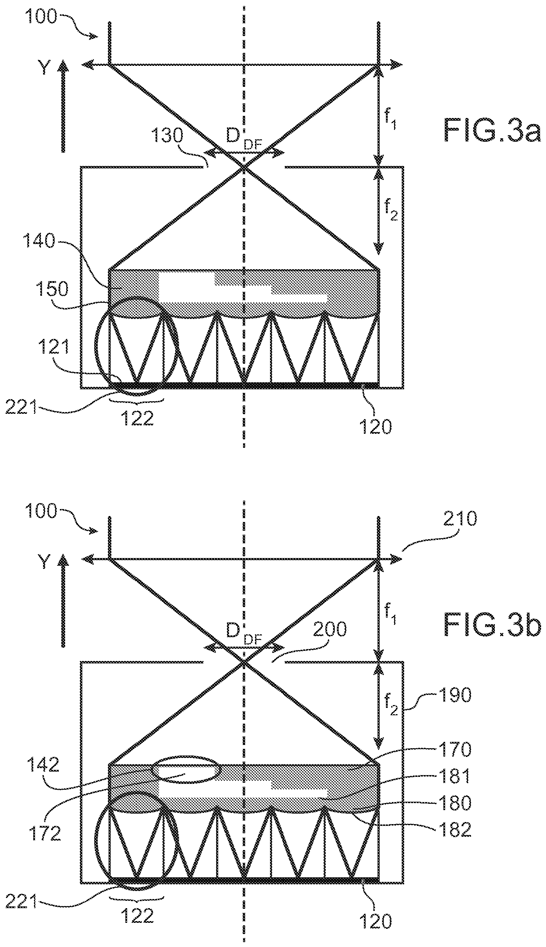

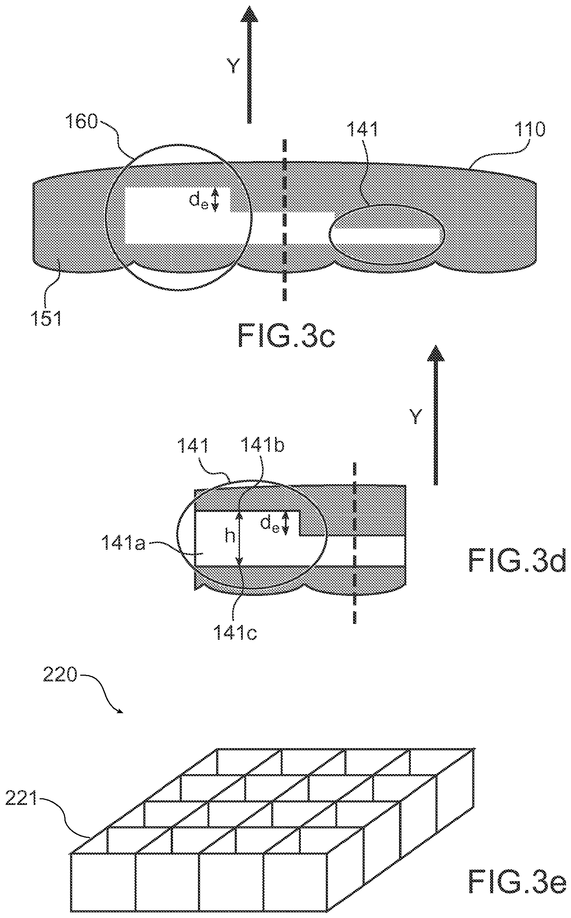

Sur les figures 3a à 3d, on peut voir un exemple de réalisation du dispositif interférométrique à deux ondes majoritaires 100 selon l'invention.

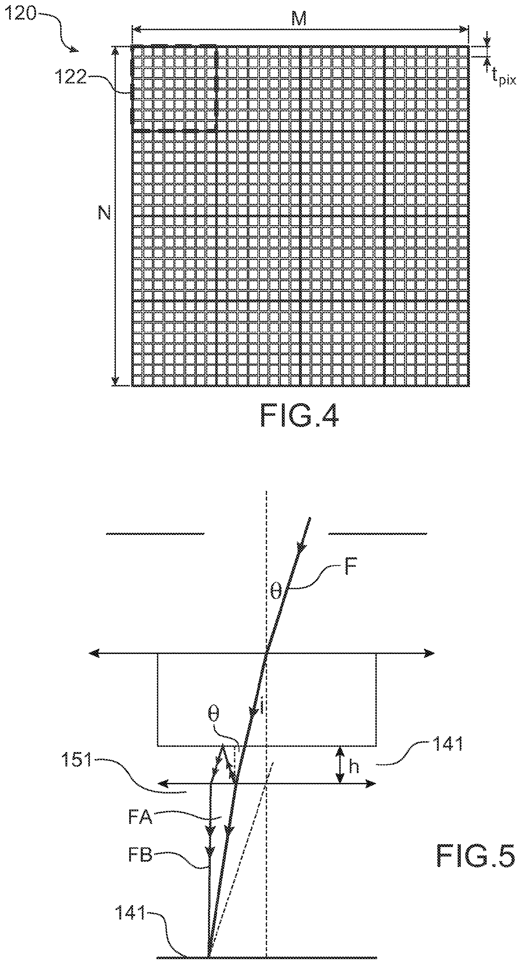

Le spectro-imageur multivoie à transformée de Fourier 100 comprend un photo détecteur 120 (figure 4) comprenant une pluralité de sites photosensibles (« Pixel » selon la terminologie Anglo-Saxonne) affleurant une surface photosensible 121 dudit photo détecteur 120. La direction perpendiculaire à la surface photosensible 121 est nommée ci-après direction Y.

Par site photosensible, nous entendons un site adapté pour compter un nombre de photons incidents sur sa surface et transformer ledit nombre de photons en un signal électrique, par exemple une tension et/ou un courant. Les sites photosensibles peuvent être disposés selon une matrice comprenant M colonnes et N lignes (il y a donc M × N sites photosensibles). Par ailleurs la taille des sites photosensibles est notée $t_{pix}$.

Le photo détecteur 120 peut comprendre un capteur d'images CMOS, un capteur d'image CCD (« Charge Coupled Device » selon la terminologie Anglo-Saxonne).

Les sites photosensibles du photo détecteur 120 peuvent avantageusement être régulièrement (de manière périodique) disposés sur une surface plane.

Le dispositif interférométrique à deux ondes majoritaires 100 peut comprendre également une lentille collimatrice 110 (figure 3c). L'axe de la lentille collimatrice 110 est parallèle à la direction Y (la lentille collimatrice 110 est donc parallèle à la surface photosensible 121). Tout au long de l'exposé, nous confondrons les termes lentille collimatrice et dioptre (selon l'invention, nous pouvons également les réduire à des moyens de collimation optique). L'axe d'une lentille est l'axe reliant les foyers image et objet d'une lentille collimatrice 110. La lentille collimatrice 110 comprend un plan focal intermédiaire 130. Le plan focal intermédiaire 130 est défini comme étant un plan perpendiculaire à l'axe de la lentille collimatrice 110 et passant par le foyer objet de ladite lentille collimatrice 110. La lentille collimatrice 110 est une lentille de diamètre Φ2 et de distance focale f2.

Le dispositif 100 selon l'invention comprend un réseau d'interféromètres à deux ondes majoritaires 140. Chaque interféromètre 141 à deux ondes majoritaires comprend une cavité 141a délimitée par deux faces 141b, 141c en regard l'une de l'autre, parallèles entre elles, et espacées d'un espacement h selon une direction perpendiculaire à la surface photosensible 121. Les interféromètres sont agencés selon un plan parallèle à la surface photosensible 121.

La cavité 141a peut être une cavité d'air, ou remplie d'un matériau solide, par exemple du Germanium.

Par réseau d'interféromètres, nous entendons une matrice bidimensionnelle d'interféromètres 141 disposés côte-à-côte selon un plan, et différents les uns des autres. Par différents les uns des autres, nous entendons que l'espacement h est différent d'un interféromètre 141 à deux ondes majoritaires à l'autre. Par conséquent, le réseau d'interféromètres à deux ondes majoritaires 140 est caractérisé par un ensemble d'espacements h, différents, imposant chacun une différence de marche différente (figure 3e).

De manière alternative, une différence de marche différente, entre chaque interféromètre, peut également être imposée par un indice de réfraction différent dans la cavité formée par chaque interféromètre. En d'autres termes, les cavités de chacun de interféromètres peuvent être remplies d'un matériau d'indice différent de manière à ce que chaque interféromètre soit associé à une différence de marche différente des autres interféromètres.

Par interféromètre 141 à deux ondes majoritaires, nous entendons, dans le cadre de la présente invention, une cavité d'air 141a délimité par deux faces 141b, 141c parallèles (et parallèles à la surface photosensible 121). Les deux faces 141b, 141c parallèles présentent un coefficient de réflexion moyen R inférieur à 60 %, préférentiellement inférieur à 50%, encore plus préférentiellement inférieur à 45 %. Le coefficient de réflexion moyen est défini par la relation $R = \sqrt{R_1 R_2}$ , où $R_1$ et $R_2$ sont les coefficients de réflexion interne respectifs des deux faces 141b, 141c délimitant la cavité d'air 141a d'un interféromètre 141 à deux ondes majoritaires selon l'invention.

L'interféromètre 141 à deux ondes majoritaires selon l'invention peut également être caractérisé par sa finesse F qui est définie par la relation suivante :

$$F = \frac{\pi\sqrt{R}}{(1-R)}$$

Pour une finesse F=10, le coefficient de réflexion moyen R est égal à 72 %.

Un coefficient de réflexion moyen élevé, par exemple supérieur à 70 %, est caractéristique d'un filtre interférentiel (autrement dit un interféromètre à onde multiple). Un tel dispositif est très délicat à fabriquer, à manipuler, et se prête mal à une production industrielle en grande quantité. Par ailleurs, un tel dispositif est très sensible à son environnement extérieur (poussière, humidité...).

Selon la présente invention, un interféromètre à deux ondes majoritaires est un interféromètre dont la finesse F est comprise entre 2 et 10, avantageusement entre 2 et 5, par exemple 4.

La figure 5 illustre le principe de fonctionnement d'un interféromètre 141 à deux ondes majoritaires selon l'invention. Dans l'exemple illustré à la figure 5, l'interféromètre 141 est éclairé par un rayonnement F. Un premier faisceau FA est transmis sans réflexion et un second faisceau FB est transmis après réflexion sur chacune des faces 141b, 141c de l'interféromètre 141 avec un déphasage $\Delta\phi$ imposé par l'espacement h entre les deux faces 141b, 141c de l'interféromètre 141 à deux ondes majoritaires. Les deux faisceaux se superposent pour former un volume d'interférences. Lorsque l'on place un plan de détection dans ce volume d'interférences, une figure d'interférences peut être observée. Pour une description détaillée des interféromètres 141 à deux ondes majoritaires, l'homme du métier peut consulter l'ouvrage [2] cité à la fin de la description détaillée.

Le dispositif selon l'invention comprend également un réseau de microlentilles 150. Les microlentilles 151 sont agencées selon un plan parallèle à la surface photosensible 121.

Par réseau de microlentilles 150, nous entendons une matrice bidimensionnelles de microlentilles 151 disposées côte-à-côte selon un plan. Chaque microlentille 151 a une ouverture numérique ou nombre d'ouverture noté $N_{ouv}$.

Chaque microlentille 151 du réseau de microlentilles 150 est appariée à un interféromètre 141 du réseau d'interféromètres 140 pour former une paire optique 160.

Par appariée, nous entendons que chaque microlentille 151 est mise en correspondance d'un interféromètre 141 selon une direction perpendiculaire à la surface photosensible 121. Autrement dit, chaque microlentille 151 est superposée, selon la direction perpendiculaire à la surface photosensible 121, avec un interféromètre 141 du réseau d'interféromètres 140. Nous entendons donc que chaque paire optique 160 correspond à un empilement d'une microlentille 151 et d'un interféromètre 141 à deux ondes majoritaires selon la direction Y. L'homme du métier comprendra à la lecture de l'exposé détaillée des modes de réalisation particuliers de l'invention que le réseau de microlentilles 150 et le réseau d'interféromètres à deux ondes majoritaires 140 forme donc un réseau de paires optiques 160.

Chaque paire optique 160 comprend donc un plan focal image en coïncidence avec la surface photosensible 121. Si une lentille collimatrice 110 est considérée, chaque paire optique 160 est ainsi disposée par rapport à la lentille collimatrice 110 et la surface photosensible 121 de sorte qu'une scène disposée dans le plan focal intermédiaire 130 se retrouve projetée par chaque paire sur une section 122 de la surface photosensible 121. Nous comprenons également qu'à chaque paire optique 160 correspond une section 122 de la surface photosensible 121 de sorte que l'ensemble des sections 122 de surface photosensible 121 forme un réseau de sections de la surface photosensible 121. Une section 122 de surface sera également appelée « voie ».

Le nombre de sections 122 de surface est aussi dit « nombre de voies », et noté $N_{voies}$. Chaque voie peut comprendre des sites photosensibles du photo détecteur 120 disposés selon $\mu$ colonnes et v lignes (il y a donc $\mu \times v$ sites photosensibles par voie).

Selon l'invention, chacune des voies image, de manière simultanée, un état d'interférence (à une différence de marche donnée, et imposée par l'espacement h de l'interféromètre à deux ondes majoritaires qui lui est associé). Autrement, l'ensemble des images collectées au niveau des différentes voies. La considération du réseau de paires optiques 160 permet de faire l'acquisition de manière simultanée d'autant d'interféro-images qu'il y a de paires optiques 160. Ainsi, selon l'invention, le traitement des données ainsi obtenues par transformée de Fourier inverse permet de reconstituer un cube d'images monochromatiques (ou spectro-images).

Ainsi, l'acquisition des spectro-images est instantanée (toutes les données nécessaires à la constitution des spectro-images sont obtenues de manière simultanée).

Par ailleurs, le dispositif selon l'invention ne comprend aucune pièce mobile.

De manière avantageuse chaque section 122 de la surface photosensible 121 comprend le même nombre de sites photosensibles. Ainsi le traitement des données collectées lors de l'observation d'une scène en est ainsi facilité. Toujours de manière avantageuse, toutes les sections 122 de la surface photosensible 121 ont la même forme et les mêmes dimensions.

Les espacements h de l'ensemble des espacements du réseau d'interféromètres à deux ondes majoritaires 140 peuvent être régulièrement répartis entre un espacement minimum $h_{min}$ et un espacement maximum $h_{max}$. Notons que plus l'espacement maximum $h_{max}$ est élevé, meilleure est la résolution spectrale.

Nous allons maintenant décrire une application de l'invention illustrée aux figures 3a à 3d.

Dans cet exemple, le dispositif est doté de la lentille collimatrice 110. Il est entendu que cette dernière peut être omise.

Selon cette application, la lentille collimatrice 110 comprend un plan focal intermédiaire 130. La lentille collimatrice 110 est disposée parallèlement à la surface photosensible 121. Par ailleurs, la lentille collimatrice 110 est disposée de sorte qu'un rayonnement passant par le plan focal intermédiaire 130 soit envoyé à l'infini en direction de la surface photosensible 121. Selon cette première application, la lentille collimatrice 110 comprend un dioptre convexe (nous confondons dans le texte lentille convexe et dioptre convexe) formée sur une première face 171 d'une première sous-lame 170.

Dès lors que la lentille collimatrice 110 est omise, le première face 171 de la première sous-lame 170 peut être un dioptre plan.

La première sous-lame 170 comprend également une seconde face 172. Le dispositif interférométrique à deux ondes majoritaires comprend également une seconde sous-lame 180. La seconde sous-lame 180 comprend une première face 181 et une seconde face 182 parallèles entre elles.

La première sous-lame 170 et la seconde sous-lame 180 peuvent être parallèles avec la surface photosensible 121.

La seconde face 172 de la première sous-lame 170 est en regard de la première face 181 de la seconde sous-lame 180.

Par sous-lame, nous entendons une lame mince à faces parallèles reliées par un contour.

La seconde sous-lame 180 comprend également une seconde face 182 sur laquelle est disposé le réseau de microlentilles 150. Des marches 142 sont formées sur une des deux faces choisie parmi la seconde face 172 de la première sous-lame 170 et la première face 181 de la seconde sous-lame 180, l'autre des deux faces étant un dioptre plan, de sorte que les marches 142 formées sur l'une des deux faces forment, avec le dioptre plan, le réseau d'interféromètres à deux ondes majoritaires 140. Chaque marche 142 est formée à une profondeur différente de celle des autres marches 142, et est à l'aplomb d'une microlentille 151 selon une direction perpendiculaire de la surface photosensible 121. Dans l'exemple illustré aux figures 3a à 3d, les marches 142 sont formées sur la seconde face 172 de la première sous-lame 170, il peut cependant être envisagé de former les marches 142 sur la première face 181 de la seconde sous-lame 180.

La technique de formation des marches 142 fait appel aux connaissances générales de l'homme du métier et n'est donc pas détaillée dans la présente invention.

Nous notons $d_e$ le saut de marche entre deux marches 142 voisines. Autrement dit $d_e$ est la différence entre les espacements h de deux marches 142 voisines. Avantageusement $d_e$ peut être constant sur toute la surface sur laquelle s'étendent les marches 142.

De manière avantageuse, le coefficient de réflexion de la seconde face 172 de la première sous-lame 170 peut être compris entre 5 % et 90 %.

Toujours de manière avantageuse, le coefficient de réflexion de la première face 181 de la seconde sous-lame 180 peut être compris entre 5 % et 90 %.

De manière particulièrement avantageuse, les coefficients de réflexion de la seconde face 172 et de la première face 181 sont égaux. Ainsi, le spectro-imageur présente un meilleur contraste.

Les marches 142 peuvent avoir une forme carrée ou rectangulaire ou hexagonal.

De manière avantageuse, le réseau d'interféromètres à deux ondes majoritaires 140 peut être une matrice bidimensionnelle carrée, ou une matrice bidimensionnelle rectangulaire.

De manière particulièrement avantageuse, le spectro-imageur 100 comprend en outre un réseau de séparateurs de signaux 220, chaque séparateur de signal 221 étant apparié à une paire optique 160, et agencé de manière à ce qu'une image formée par chaque paire optique 160 au niveau de la surface photosensible 121 soit limitée à la section 122 de la surface photosensible 121 en regard de laquelle ladite paire optique 160 est disposée.

Ainsi, l'image formée par une paire optique ne déborde pas sur une section 122 associée à une autre paire optique.

Chaque séparateur de signal 221 peut comprendre des premières parois latérales perpendiculaires à la surface photosensible, et avantageusement en appui contre ladite surface photosensible. Autrement dit, les séparateurs de signal forment un quadrillage sur la surface photosensible 121, et séparent physiquement chaque voie de sorte que chacune desdites voies ne collecte que le signal optique issu de la paire optique à laquelle elle est appariée.

Chaque séparateur de signal 221 peut également comprendre des secondes parois latérales, chacune des secondes parois latérales isolant optiquement deux interféromètres à deux ondes majoritaires adjacents.

Par « isolant optiquement », on entend des parois opaques dans le domaine de longueurs d'onde de travail du spectro-imageur.

Toujours de manière avantageuse, le photo détecteur 120, la lentille collimatrice 110 (si elle doit être considérée), le réseau d'interféromètres à deux ondes majoritaires 140, et le réseau de microlentilles 150 peuvent tous être disposés dans une enceinte cryostatique 190. En effet, la compacité du dispositif permet de considérer de refroidir le dispositif dans son entièreté.

Avantageusement, l'enceinte cryostatique 190 peut comprendre une ouverture 200 au niveau de l'écran froid de ladite enceinte 190. Autrement dit, l'écran froid et son ouverture 200 forme un diaphragme permettent de limiter le champ, par exemple l'ouverture 200 présente un diamètre $\Phi_{DF}$. Plus particulièrement, l'ouverture 200 est en coïncidence avec le plan focal intermédiaire 130. L'enceinte cryostatique 190 est par exemple un cryostat, plus particulièrement le cryostat est du type Scorpio™ ou Daphnis™ vendu par la société SOFRADIR.

Notons que l'emploi d'une enceinte cryostatique 190 n'est pas limité à cette seule première application, et peut être généralisé à toutes les variantes de la présente invention.

Le dispositif peut comprendre en outre un objectif de focalisation 210 destiné à focaliser un rayonnement incident au niveau du plan focal intermédiaire 130. L'objectif de focalisation 210 a une distance focale f1, et un diamètre $\Phi 1$. L'objectif de focalisation peut être une lentille ou un objectif optique.

La lentille collimatrice 110 présente une première surface en regard du plan focal intermédiaire 130, et les microlentilles 151 présentent chacune une surface bombée. Lesdites première surface et surfaces bombées peuvent être traitées avec un dépôt antireflet, le traitement antireflet étant avantageusement une couche de matériau diélectrique, avantageusement du ZnS.

De manière particulièrement avantageuse, les interféromètres 141 du réseau d'interféromètres à deux ondes majoritaires 140 peuvent présenter un coefficient de réflexion moyen R compris entre 12 % et 60 %, avantageusement compris entre 20 % et 50 %, par exemple égal à 42 %.

En fonctionnement, les interféro-images sont lues sur chacune des voies du photo détecteur. Des corrections telles que la linéarité, le gain, ou encore « l'offset » peuvent intervenir.

Les interféro-images peuvent également subir d'autres corrections telles que :

  1/ la suppression des mauvais pixels,
  2/ la suppression des pixels aux niveau des frontières des différentes voies,
  3/ un décalage,
  4/ un barrilet(correction des aberrations géométriques)
  5/ un vignetting (ajustement de brillance),
  6/ des corrections photométriques

En outre, pour chaque pixel équivalent dans les interféro-images, on peut ensuite reconstruire les interférogrammes, autrement dit remplir un tableau, pour chaque pixel équivalent, des valeurs de flux en fonction de la différente de marche imposée par les différents interféromètres à deux ondes majoritaires.

Enfin, chaque interférogramme est inversé par transformé de Fourier inverse pour se retrouver avec un jeu de données homogènes en nombre d'onde ou en longueur d'onde, autrement dit reconstruire le cube d'images.

A titre d'illustration de cette première application, les première et seconde sous-lame 170, 180 peuvent comprendre du germanium. Le germanium est particulièrement intéressant pour des applications de la domaine de l'infrarouge. Les propriétés thermomécaniques sont également compatibles avec un refroidissement du dispositif dès lors qu'il est placé dans une enceinte cryostatique 190.

Par ailleurs les dimensions des marches 142, l'ensemble des espacements h, les caractéristiques géométriques du dioptre convexe et des microlentilles 151 peuvent être déterminées par des techniques de calculs connues de l'homme du métier (par exemple les caractéristiques du dioptre et des microlentilles 151 peuvent être calculées à l'aide du logiciel ZEMAX).

Le dimensionnement des première et seconde sous-lames 170, 180 peut dépendre des caractéristiques du photo détecteur 120 et des caractéristiques finales du dispositif. A cet égard, nous présentons, dans le cadre de la première application, une méthodologie pour la détermination le dimensionnement du dioptre convexe, des marches 142 et des microlentilles 151. Cette démarche n'est cependant pas limitée à cette première application, et peut être transposée à tous les modes de réalisations décrits dans la présente demande.

Le photo détecteur 120 peut présenter les caractéristiques reprises dans le tableau 1.

Tableau 1

| Intitulé | Valeur (*exemple*) | Commentaire |
|---|---|---|
| Àmin | 1,5 $\mu m$ | Longueur d'onde minimale détectable par le photo détecteur |
| λmax | 5,5 $\mu m$ | Longueur d'onde maximale détectable par le photo détecteur |
| M | 640 | Nombre de colonnes du photo détecteur |
| N | 512 | Nombre de lignes du photo détecteur |
| μ | 20 | Nombre de colonnes pour une voie |
| v | 20 | Nombre de lignes pour une voie |
| n | 1 | Indice du milieu dans la cavité des interféromètres à deux ondes majoritaires |
| tpix | 15 $\mu m$ | Taille des sites photosensibles du photo détecteur |
| FOV | 5° | Champ total du spectro-imageur (*Field of View*) |
| f2 | 20 mm | Longueur focale introduite par le dioptre convexe de la première sous-lame |
| Nouv | 3 | Nombre d'ouverture de chaque micro-lentille |

Les caractéristiques du photo détecteur permettent de calculer les caractéristiques du dispositif selon l'invention et présentées dans le tableau 2.

Tableau 2

| Intitulé | Commentaire | Equations |
|---|---|---|
| $N_{voies}$ | Nombre de voies du spectro-imageur | $N_{voies} = \dfrac{M}{\mu} X \dfrac{N}{\nu}$ |
| K | Facteur de sous-échantillonnage de l'interférogramme | $K = E\left[\dfrac{\lambda_{min}}{\lambda_{max} - \lambda_{min}}\right]$ Où E est la fonction « partie entière » |
| $d_e$ | Saut de marche entre deux voies voisines | $d_e = \dfrac{(K+1)\lambda_{min}}{4n}$ |
| $d\sigma$ | Résolution spectrale (exprimée en cm$^{-1}$) | $d\sigma = \dfrac{1}{(N_{voies} - 1)(K+1)\lambda_{min}}$ |
| $e_{max}$ | Saut entre la première marche et la dernière marche | $e_{max} = (N_{voies} - 1)d_e$ |

La figure 5 illustre le parcours des rayons pour une voie optique. Un rayonnement incident sur la lentille collimatrice 110 (avec un angle d'incidence θ par rapport à l'axe optique de la lentille collimatrice 110) est réfracté lorsqu'il arrive sur la première face 171 de la première sous-lame 170. Le rayonnement émerge de la première sous-lame 170 au niveau de sa seconde face 172 (dans la cavité d'air 141a d'un interféromètre 141 à deux ondes majoritaires) selon le même angle θ. Une partie de ce rayonnement (noté FA sur la figure 5) est transmis, et donc focalisée par la microlentille 151 sur le photo détecteur 120. Une autre partie de ce rayonnement subit une réflexion sur chacune des faces 141b, 141c de l'interféromètre 141 à deux ondes majoritaires avant d'être à son tour transmis et focalisée par la microlentille 151 (rayonnement noté FB sur la figure 5). Les rayonnements FA et FB interfèrent dans la surface photosensible 121 (en effet ces deux rayonnements FA et FB sont focalisés au même point de la surface photosensible 121). La différence de marche introduite par l'interféromètre 141 à deux ondes majoritaires entre les rayonnements FA et FB est égale à :

$$\delta = 2nh\cos(\theta) = 2nh\left(1 - \frac{\theta^2}{2}\right)$$

Où n est l'indice de la cavité d'air 141a (n=1). Ainsi des anneaux d'interférences se forment sur la surface photosensible 121 à partir d'un certain angle d'incidence θ. Autrement dit, à une voie donnée, la voie n°k par exemple, correspond majoritairement à une différence de marche $\delta_k$, mais cette différence de marche évolue en fonction de l'angle d'incidence θ, selon une loi quadratique en θ. Ainsi, à partir d'un certain angle d'incidence θ, les anneaux d'interférences peuvent être trop serrés pour être correctement échantillonnés par les sites photosensibles. On peut alors imposer comme différence de marche maximale tolérable, à l'intérieur d'un site photosensible, la valeur de $\lambda_{min}/4$. En dérivant

$$d\delta = 2he\sin(\theta)d\theta \leq \frac{\lambda_{min}}{4} \quad \text{avec} \quad d\theta = \frac{t_{pix}\sqrt{2}}{f_{\mu L}}.$$

la relation régissant la différence de marche, on obtient ainsi :

Ainsi, un angle d'incidence maximum $\theta_{max}$ peut être défini pour chaque voie et relié aux différents paramètres du dispositif par la relation :

$$\theta_{max} = \frac{f_{\mu L}\lambda_{min}}{8\sqrt{2}ne_{max}t_{pix}} = \frac{1}{2\sqrt{2}}\frac{N_{ouv}\phi_{\mu L}}{t_{pix}(N_{voies} - 1)(K+1)}$$

$\Phi_{\mu L}$ étant le diamètre d'une microlentille 151, et $f_{\mu L}$ la distance focale de ladite microlentille 151.

Ainsi, plus $e_{max}$ est élevé, meilleure est la résolution spectrale, et plus faible sera le champ angulaire acceptable par voie.

Dans la pratique, pour les configurations à faible résolution spectrale, l'angle d'incidence maximum tolérable est limité à l'angle d'ouverture des microlentilles 151. Dès que cette valeur est dépassée, le champ imagé par une microlentille 151 sur la surface photosensible 121 peut dépasser sur celui des microlentilles 151 voisines $(\theta_{max} \leq \sin^{-1}\left(\frac{1}{2N_{ouv}}\right))$.

Tel que précisé précédemment, chaque voie correspond à une microlentille 151, et la zone du détecteur allouée à chaque voie correspond au diamètre de la microlentille 151 (autrement dit $\Phi_{\mu L} = t_{pix}\,\mu$).

Les considérations précédentes donnent ainsi les détails de la conception du dispositif selon l'invention selon la première application.

Ainsi, il reste à dimensionner, à l'aide des relations listées dans le tableau 3, les paramètres de l'objectif de focalisation 210 de longueur focale f1 et de diamètre Φ1, du limiteur de champ de diamètre ΦDF, et de la première sous-lame de longueur focale f2 (donnée d'entrée) et de diamètre Φ2.

Tableau 3

| Intitulé | Equations |
|---|---|
| $\Phi_{DF}$ | $\Phi_{DF} = 2f_2 \tan(\theta_{max})$ |
| $\Phi_2$ | $\phi_2 = t_{pix}\sqrt{M^2 + N^2}$ |
| $f_1$ | $f_1 = \dfrac{\phi_{DF}}{2\tan(FOV/2)}$ |
| $\Phi_1$ | $\phi_1 = \dfrac{f_1}{f_2}\phi_2$ |

Un premier exemple de spectro-imageur 100 multivoie à transformée de Fourier à haute résolution spectrale est présenté dans les tableaux 4 et 5. Dans cet exemple, le dispositif fonctionne à des longueurs d'ondes optiques comprises entre 1,5 et 5,5 μm, avec une résolution spectrale de 1 cm⁻¹.

Tableau 4

| Intitulé | Valeur (*exemple*) | Commentaire |
|---|---|---|
| λmin | 1, 5 μm | Longueur d'onde minimale détectable par le photo détecteur |
| λmax | 5,5 μm | Longueur d'onde maximale détectable par le photo détecteur |
| M | 640 | Nombre de colonnes du photo détecteur |
| N | 512 | Nombre de lignes du photo détecteur |
| μ | 7 | Nombre de colonnes pour une voie |
| v | 7 | Nombre de lignes pour une voie |
| n | 1 | Indice du milieu dans la cavité des interféromètre à deux ondes majoritaires |
| tpix | 15 μm | Taille des sites photosensibles du photo détecteur |
| FOV | 1° | Champ total du spectro-imageur (Field of View) |
| f2 | 15 mm | Longueur focale introduite par le dioptre convexe de la première sous-lame |
| Nouv | 30 | Nombre d'ouverture de chaque micro-lentille |

Tableau 5

| Intitulé | Valeur (*exemple*) |
|---|---|
| Nvoies | 6643 |
| K | 0 |
| de | 0,375 |
| $d\sigma$ | 1 cm$^{-1}$ |
| Nb de bandes utiles | 4831 |
| $e_{max}$ | 2490,75 $\mu$m |
| $\theta_{max}$ | 0,011 rad |
| $\Phi_{\mu L}$ | 105 $\mu$m |
| $f_{\mu L}$ | 3150 $\mu$m |
| Tache de diffusion | 105 $\mu$m |
| Nombre de points résolus | 1 |
| Profondeur de champ | 3150 $\mu$m |
| $\Phi_{DF}$ | 0,335 mm |
| $\Phi_2$ | 12,3 mm |
| $f_1$ | 19,2 mm |
| $\Phi_1$ | 15,75 mm |

Un second exemple de spectro-imageur 100 multivoie à transformée de Fourier à faible résolution spectrale est présenté dans les tableaux 6 et 7.

Dans cet exemple, le dispositif fonctionne à des longueurs d'ondes optiques comprises entre 1,5 et 5,5 $\mu$m.

Tableau 6

| Intitulé | Valeur (*exemple*) | Commentaire |
|---|---|---|
| $\lambda$min | 1,5 $\mu$m | Longueur d'onde minimale détectable par le photo détecteur |
| $\lambda$max | 5,5 $\mu$m | Longueur d'onde maximale détectable par le photo détecteur |
| M | 1024 | Nombre de colonnes du photo détecteur |
| N | 768 | Nombre de lignes du photo détecteur |
| $\mu$ | 100 | Nombre de colonnes pour une voie |
| v | 100 | Nombre de lignes pour une voie |
| n | 1 | Indice du milieu dans la cavité des interféromètre à deux ondes majoritaires |
| tpix | 10 $\mu$m | Taille des sites photosensibles du photo détecteur |
| FOV | 30° | Champ total du spectro-imageur (Field of View) |
| f2 | 15 mm | Longueur focale introduite par le dioptre convexe de la première sous-lame |
| Nouv | 4 | Nombre d'ouverture de chaque micro-lentille |

Tableau 7

| Intitulé | Valeur (*exemple*) |
|---|---|
| Nvoies | 70 |
| K | 0 |

(suite)

| Intitulé | Valeur (*exemple*) |
|---|---|
| de | 0,375 |
| $d\sigma$ | 96,62 cm$^{-1}$ |
| Nb de bandes utiles | 50 |
| $e_{max}$ | 25,875 $\mu$m |
| $\theta_{max}$ | 0,125 rad |
| $\Phi_{\mu L}$ | 1000 $\mu$m |
| $f_{\mu L}$ | 4000 $\mu$m |
| Tache de diffusion | 14 $\mu$m |
| Nombre de points résolus | 5102 |
| Profondeur de champ | 56 $\mu$m |
| $\Phi_{DF}$ | 3,780 mm |
| $\Phi_2$ | 12,8 mm |
| $f_1$ | 7,1 mm |
| $\Phi_1$ | 6,02 mm |

La présente invention a été décrite selon un agencement particulier du réseau d'interféromètres à deux ondes majoritaires 140 et du réseau de microlentilles 150. L'invention n'est cependant pas limitée à cet agencement. En effet, un spectro-imageur pour lequel l'ordre entre le réseau de micro-lentilles et le réseau d'interféromètres à deux ondes majoritaire est inversé par rapport à la description qui précède (nous entendons que le réseau d'interféromètre 140 est disposé entre la surface photosensible et le réseau de micro-lentilles) peut être aisément envisagé dans le cadre de la présente invention.

De manière avantageuse, le spectro-imageur selon la présente invention peut être mis en œuvre pour la détection et/ou la quantification de gaz et/ou d'aérosols, en particulier du dioxyde de carbone, de eau, ou du méthane. Le principe de mesure s'appuie sur technique décrite par Fortunato [3].

Toujours de manière avantageuse un spectro-imageur 100 pet être mis en œuvre dans un dispositif électronique mobile, par exemple un téléphone mobile ou une tablette ou un drone.

## RÉFÉRENCES

[1] Rui Shogenji et al., "Multispectral imaging using compact compound optics", Optics Express, 12, 8, 1643-1655, (2004).

[2] Principles of Optics, Max Born & Emil Wolf, Pergamon Press, Sixth Edition, 1980, section VII ("Elements of the theory of interferences and interferometers").

[3] G. Fortunato, "Application de la corrélation interférentielle de spectres à la détection de polluants atmosphériques," J. Opt. 9, 281 (1978).

## Revendications

1. Spectro-imageur (100) multivoie à transformée de Fourier, le dispositif comprenant :

   - un photo détecteur (120) comprenant une pluralité de sites photosensibles affleurant une surface photosensible (121) dudit photo détecteur (120),
   - un réseau d'interféromètres à deux ondes majoritaires (140) d'une finesse comprise entre 2 et 10, comprenant chacun une cavité (141a) délimitée par deux faces (141b, 141c) en regard l'une de l'autre et parallèles à la surface photosensible (121), les deux faces (141b, 141c) de chaque interféromètre (141) étant espacées d'un espacement h différent d'un interféromètre (141) à l'autre, et les interféromètres (141) du réseau d'interféromètres (140) étant agencés selon un plan parallèle à la surface photosensible (121),
- un réseau de microlentilles (150) agencées dans un plan parallèle à la surface photosensible (121),

chaque microlentille (151) du réseau de microlentilles (150) étant appariée à un interféromètre (141) du réseau d'interféromètres à deux ondes majoritaires (140) pour former une paire optique (160), ladite paire optique (160) comprenant un plan focal image coïncidant avec la surface photosensible (121), ladite paire étant en regard d'une section (122) de la surface photosensible (121).

2. Spectro-imageur selon la revendication 1, dans lequel le spectro-imageur (100) comprend en outre un réseau de séparateurs de signaux (220), chaque séparateur de signal (221) étant apparié à une paire optique (160) et agencé de manière à ce qu'une image formée par chaque paire optique (160) au niveau de la surface photosensible (121) soit limitée à la section (122) de la surface photosensible (121) en regard de laquelle ladite paire optique (160) est disposée.

3. Spectro-imageur selon la revendication 2, dans lequel chaque séparateur de signal (221) comprend des premières parois latérales perpendiculaires à la surface photosensible, et avantageusement en appui contre ladite surface photosensible.

4. Spectro-imageur selon la revendication 2 ou 3, dans lequel chaque séparateur de signal (221) comprend des secondes parois latérales, chacune des secondes parois latérales isolant optiquement deux interféromètres à deux ondes majoritaires adjacents.

5. Spectro-imageur selon l'une des revendications 1 à 4, dans lequel le spectro-imageur comprend une première sous-lame (170), la première sous-lame (170) comprend une première face (171) et une seconde face (172) parallèle à la première face (171), la seconde face (172) étant parallèle et en regard d'une première face (181) d'une seconde sous-lame (180), la seconde sous-lame (180) comprenant également une seconde face (182) sur laquelle est disposé le réseau de microlentilles (150), le dispositif comprenant également des marches (142) formées sur l'une des deux faces choisie parmi la seconde face (172) de la première sous-lame (170) et la première face (181) de la seconde sous-lame (180), l'autre des deux faces étant un dioptre plan, de sorte que les marches (142) formées sur l'une des deux faces forment avec le dioptre plan le réseau d'interféromètres à deux ondes majoritaires (140), chaque marche (142) étant formée à une profondeur différente de celle des autres marches (142), et étant à l'aplomb d'une microlentille selon une direction perpendiculaire de la surface photosensible (121).

6. Spectro-imageur selon la revendication 5, dans lequel la deuxième face (172) de la première sous-lame (170) comprend un coefficient de réflexion compris entre 5 % et 90 %.

7. Spectro-imageur selon la revendication 5 ou 6, dans lequel la première face (181) de la seconde sous-lame (180) comprend un coefficient de réflexion compris entre 5 % et 90 %.

8. Spectro-imageur selon l'une des revendications 4 à 6, dans lequel les marches (142) ont une forme carrée ou rectangulaire ou hexagonale.

9. Spectro-imageur selon l'une des revendications 1 à 8, dans lequel les interféromètres (141) du réseau d'interféromètres à deux ondes majoritaires (140) sont distribués selon une matrice bidimensionnelle, avantageusement une matrice bidimensionnelle carrée.

10. Spectro-imageur selon l'une des revendications 1 à 9, dans lequel le photo détecteur (120), le réseau d'interféromètres à deux ondes majoritaires (140), et le réseau de microlentilles (150) sont tous disposés dans une enceinte cryostatique (190), avantageusement l'enceinte cryostatique (190) comprend une ouverture (200)

11. Spectro-imageur selon l'une des revendications 1 à 10, dans lequel les microlentilles (151) présentent chacune une surface bombée, lesdites surfaces bombées étant traitées avec un dépôt antireflet, le traitement antireflet étant avantageusement une couche de matériau diélectrique, avantageusement du ZnS.

12. Spectro-imageur selon l'une des revendications 1 à 11, dans lequel les interféromètres (141) du réseau d'interféromètres à deux ondes majoritaires (140) présentent un coefficient de réflexion moyen compris entre 12 % et 60 %, avantageusement compris entre 20 % et 50 %, préférentiellement égal à 42 %.

13. Utilisation du spectro-imageur (100) selon l'une des revendications 1 à 12 pour la détection et/ou la quantification de gaz et/ou d'aérosols.

14. Utilisation selon la revendication 13, les gaz sont des gaz à effet de serre, en particulier, du dioxyde de carbone, de eau, ou du méthane.

15. Dispositif électronique mobile comprenant un spectro-imageur (100) selon l'une des revendications 1 à 12, le dispositif électronique mobile étant avantageusement un téléphone mobile ou une tablette ou un drone.

**Patentansprüche**

1. Fourier-Transformations-Mehrkanal-Infrarotspektrometer (100), die Vorrichtung umfassend:

   - einen Photodetektor (120), eine Vielzahl von lichtempfindlichen Bereichen umfassend, die auf einer lichtempfindlichen Oberfläche (121) des Photodetektors (120) erscheinen,
   - eine Anordnung von Zwei-Wellen-Mehrwellenlängeninterferometern (140) mit einer Feinheit zwischen 2 und 10, die jeweils einen Hohlraum (141a) umfassen, der von zwei gegenüberliegenden Flächen (141b, 141c) begrenzt und parallel zur lichtempfindlichen Oberfläche (121) ist, wobei die zwei Flächen (141b, 141c) jedes Interferometers (141) um einen Abstand h beabstandet sind, der unterschiedlich ist von einem Interferometer (141) zum anderen, und wobei die Interferometer (141) der Anordnung von Interferometern (140) in einer Ebene parallel zur lichtempfindlichen Oberfläche (121) eingerichtet sind,
   - eine Anordnung von Mikrolinsen (150), die in einer Ebene parallel zur lichtempfindlichen Oberfläche (121) eingerichtet sind,

   wobei jede Mikrolinse (151) der Anordnung von Mikrolinsen (150) mit einem Interferometer (141) der Anordnung von Zwei-Wellen-Mehrwellenlängeninterferometern (140) gepaart ist, um ein optisches Paar (160) zu bilden, wobei das optische Paar (160) eine Bildfokusebene umfasst, die mit der lichtempfindlichen Oberfläche (121) zusammenfällt, wobei das Paar gegenüber einem Abschnitt (122) der lichtempfindlichen Oberfläche (121) liegt.

2. Infrarotspektrometer nach Anspruch 1, wobei das Infrarotspektrometer (100) ferner eine Anordnung von Signaltrennern (220) umfasst, wobei jeder Signaltrenner (221) mit einem optischen Paar (160) gepaart ist und so eingerichtet, dass ein Bild, das von jedem optischen Paar (160) auf der lichtempfindlichen Oberfläche (121) gebildet wird, auf den Abschnitt (122) der lichtempfindlichen Oberfläche (121) begrenzt ist, gegenüber dem das optische Paar (160) angeordnet ist.

3. Infrarotspektrometer nach Anspruch 2, wobei jeder Signaltrenner (221) erste Seitenwände umfasst, die senkrecht zur lichtempfindlichen Oberfläche sind und vorteilhafterweise gegen die lichtempfindliche Oberfläche anstehen.

4. Infrarotspektrometer nach Anspruch 2 oder 3, wobei jeder Signaltrenner (221) zweite Seitenwände umfasst, wobei jede der zweiten Seitenwände zwei benachbarte Zwei-Wellen-Mehrwellenlängeninterferometer optisch isoliert.

5. Infrarotspektrometer nach einem der Ansprüche 1 bis 4, wobei das Infrarotspektrometer eine erste untere Aufnahme (170) umfasst, wobei die erste untere Aufnahme (170) eine erste Fläche (171) und eine zweite Fläche (172) parallel zur ersten Fläche (171) umfasst, wobei die zweite Fläche (172) parallel und gegenüber einer ersten Fläche (181) einer zweiten unteren Aufnahme (180) ist, wobei die zweite untere Aufnahme (180) auch eine zweite Fläche (182) umfasst, auf der die Anordnung von Mikrolinsen (150) angeordnet ist, wobei die Vorrichtung auch Stufen (142) umfasst, die auf einer der zwei Flächen gebildet sind, ausgewählt von der zweiten Fläche (172) der ersten unteren Aufnahme (170) und der ersten Fläche (181) der zweiten unteren Aufnahme (180), wobei die andere der zwei Flächen ein ebenes Diopter ist, so dass die Stufen (142), die auf einer der zwei Flächen gebildet sind, zusammen mit dem ebenen Diopter die Anordnung von Zwei-Wellen-Mehrwellenlängeninterferometern (140) bilden, wobei jede Stufe (142) in einer von den anderen Stufen (142) unterschiedlichen Tiefe gebildet ist, und lotrecht zu einer Mikrolinse in einer senkrechten Richtung der lichtempfindlichen Oberfläche (121) ist.

6. Infrarotspektrometer nach Anspruch 5, wobei die zweite Fläche (172) der ersten unteren Aufnahme (170) einen

14

Reflexionsfaktor zwischen 5 % und 90 % umfasst.

7. Infrarotspektrometer nach Anspruch 5 oder 6, wobei die erste Fläche (181) der zweiten unteren Aufnahme (180) einen Reflexionsfaktor zwischen 5 % und 90 % umfasst.

8. Infrarotspektrometer nach einem der Ansprüche 4 bis 6, wobei die Stufen (142) eine quadratische oder rechteckige oder sechseckige Form haben.

9. Infrarotspektrometer nach einem der Ansprüche 1 bis 8, wobei die Interferometer (141) der Anordnung von Zwei-Wellen-Mehrwellenlängeninterferometern (140) in einer zweidimensionalen Matrix verteilt sind, vorteilhafterweise in einer zweidimensionalen quadratischen Matrix.

10. Infrarotspektrometer nach einem der Ansprüche 1 bis 9, wobei der Photodetektor (120), die Anordnung von Zwei-Wellen-Mehrwellenlängeninterferometern (140) und die Anordnung von Mikrolinsen (150) alle in einem kryostatischen Behälter (190) angeordnet sind, wobei der kryostatische Behälter (190) vorteilhafterweise eine Öffnung (200) umfasst.

11. Infrarotspektrometer nach einem der Ansprüche 1 bis 10, wobei die Mikrolinsen (151) jeweils eine gewölbte Oberfläche aufweisen, wobei die gewölbten Oberflächen mit einer Entspiegelungsbeschichtung behandelt werden, wobei die Entspiegelungsbeschichtung vorteilhafterweise eine Schicht aus dielektrischem Material ist, vorteilhafterweise aus ZnS.

12. Infrarotspektrometer nach einem der Ansprüche 1 bis 11, wobei die Interferometer (141) der Anordnung von Zwei-Wellen-Mehrwellenlängeninterferometern (140) einen mittleren Reflexionsfaktor zwischen 12 % und 60 % aufweisen, vorteilhafterweise zwischen 20 % und 50%, präferenziell gleich 42 %.

13. Anwendung des Infrarotspektrometers (100) nach einem der Ansprüche 1 bis 12 zur Detektion und/oder Quantifizierung von Gasen und/oder Aerosolen.

14. Anwendung nach Anspruch 13, wobei die Gase Treibhausgase sind, insbesondere Kohlendioxid, Wassergas oder Methan.

15. Mobile elektronische Vorrichtung, ein Infrarotspektrometer (100) nach einem der Ansprüche 1 bis 12 umfassend, wobei die mobile elektronische Vorrichtung vorteilhafterweise ein Mobiltelefon, ein Tablet oder eine Drohne ist.

**Claims**

1. Fourier transform multichannel spectral imager (100), the device comprising:

   - a photodetector (120) comprising a plurality of photosensitive sites flush with a photosensitive surface (121) of said photodetector (120),
   - a network of two majority wave interferometers (140), each comprising a cavity (141a) delimited by two faces(141b, 141c) facing each other and parallel to the photosensitive surface (121), the two faces (141b, 141c) of each interferometer (141) being at a different spacing h from one interferometer (141) to the next, the interferometers (141) of the interferometers network (140) being arranged in a plane parallel to the photosensitive surface (121),
   - a network of microlenses (150) formed in a plane parallel to the photosensitive surface (121),

   Each microlens (151) in the network of microlenses (151) being paired with an interferometer (141) in the network of two majority wave interferometers (140) to form an optical pair (160), said optical pair (160) comprising a focal image plane coincident with the photosensitive surface (121), said pair facing a section (122) of the photosensitive surface (121).

2. Spectral imager according to claim 1, wherein the spectral imager (100) also comprises a signal separation network (220), each signal separator (221) being paired with an optical pair (160) and arranged such that an image formed by each optical pair (160) at the photosensitive surface (121) is limited to the section (122) of the photosensitive surface (121) facing which said optical pair (160) is positioned.

3. Spectral imager according to claim 2, wherein each signal separator (221) comprises first side walls perpendicular to the photosensitive surface, and advantageously bearing in contact with said photosensitive surface.

4. Spectral imager according to claim 2 or 3, wherein each signal separator (221) comprises second side walls, each of the second side walls optically isolating two adjacent two majority wave interferometers.

5. Spectral imager according to one of claims 1 to 4, wherein the spectral imager comprises a first sub-slide (170), the first sub-slide (170) comprises a first face (171) and a second face (172) parallel to the first face (171), the second face (172) being parallel to and facing a first face (181) of a second sub-slide (180), the second sub-slide (180) also comprising a second face (182) on which the network of microlenses (150) is located, the device also comprising steps (142) formed on one of the two faces chosen from among the second face (172) of the first sub-slide (170) and the first face (181) of the second sub-slide (180), the other of the two faces being a plane diopter, such that the steps (142) formed on one of the two faces form the network of two majority wave interferometers (140) with the plane diopter, each step (142) being formed at a different depth from the other steps (142), and being vertically in line with a microlens along a direction perpendicular to the photosensitive surface (121).

6. Spectral imager according to claim 5, wherein the second face (172) of the first sub-slide (170) has a reflection factor equal to between 5% and 90%.

7. Spectral imager according to claim 5 or 6, wherein the first face (181) of the second sub-slide (180) has a reflection factor equal to between 5% and 90%.

8. Spectral imager according to one of claims 4 to 6, wherein the shape of the steps (142) is square or rectangular or hexagonal.

9. Spectral imager according to one of claims 1 to 8, wherein the interferometers (141) in the network of two majority wave interferometers (140) are distributed in a two-dimensional matrix, advantageously a square two-dimensional square matrix.

10. Spectral imager according to one of claims 1 to 9, wherein the photodetector (120), the network of two majority wave interferometers (120) and the microlenses network (150) are all located in a cryostatic chamber (190), and advantageously the cryostatic chamber (190) comprises an aperture (200).

11. Spectral imager according to one of claims 1 to 10, wherein each of the microlenses (151) has a curved surface, said curved surfaces being treated with an anti-reflection deposit, the anti-reflection treatment advantageously being a layer of dielectric material, advantageously ZnS.

12. Spectral imager according to one of claims 1 to 11, wherein the interferometers (141) in the network of two majority wave interferometers (140) have an average coefficient of reflection equal to between 12% and 60 %, advantageously between 20% and 50%, preferably equal to 42%.

13. Use of the spectral imager (100) according to one of claims 1 to 12 for detection and/or quantification of gas and/or aerosols.

14. Use according to claim 13, the gases are greenhouse gases, and particularly carbon dioxide; water or methane.

15. Mobile electronic device comprising a spectral imager (100) according to one of claims 1 to 12, the mobile electronic device advantageously being a smartphone or a tablet or a drone.

FIG.1

FIG.2

FIG.3a

FIG.3b

**FIG.3c**

**FIG.3d**

**FIG.3e**

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012268745 A1
- US 6016199 A

**Littérature non-brevet citée dans la description**

- **RUI SHOGENJI et al.** Multispectral imaging using compact compound optics. *Optics Express,* 2004, vol. 12 (8), 1643-1655
- Elements of the theory of interferences and interferometers. **MAX BORN ; EMIL WOLF.** Principles of Optics. Pergamon Press, 1980
- **G. FORTUNATO.** Application de la corrélation interférentielle de spectres à la détection de polluants atmosphériques. *J. Opt.,* 1978, vol. 9, 281